# EUROPEAN PATENT APPLICATION

(11) **EP 4 831 639 A1**
(43) Date of publication of application: **28.10.2026**
(21) Application number: 24906884.2
(22) Date of filing: 11.10.2024
(51) Int. Cl.: G01N 35/00

(54) **SPECIMEN INSPECTION AUTOMATION SYSTEM AND METHOD FOR PREDICTING AVAILABLE TIME SLOT IN SPECIMEN INSPECTION AUTOMATION SYSTEM**

(30) Priority: 19.12.2023 JP 2023214179
(71) Applicant: Hitachi High-Tech Corporation, Minato-ku Tokyo 105-6409 (JP)
(72) Inventor: SIPAYUNG Shinta Masyta, Tokyo 105-6409 (JP); SUZUKI Atsushi, Tokyo 105-6409 (JP); UMEKI Taro, Tokyo 105-6409 (JP)
(74) Representative: MERH-IP Matias Erny Reichl Hoffmann Patentanwälte PartG mbB
(86) International application number: PCT/JP2024/036446
(87) International publication number: WO 2025/134496

(57) **Abstract**

The purpose of the present invention is to provide a sample test automation system capable of executing maintenance processing in an operation state. A sample test automation system according to the present invention comprises: a storage unit that stores sample data relating to a sample to be tested; and a control unit. The control unit predicts an available time slot in which the load of the control unit falls below a predetermined level on the basis of at least one of information relating to test of the sample and a used capacity history of the storage unit

## Description

### Technical Field

The present invention relates to a sample test automation system and a method for predicting an available time slot in the sample test automation system, and for example, relates to a system having a function of automatically deleting sample data.

### Background Art

In a data processing apparatus for instrumental analysis that executes chemical or physical analysis, there is a technique for continuously performing stable and highly reliable analysis while avoiding memory leakage. Such a technique is described in, for example, PTL 1.

PTL 1 discloses that "in a data processing apparatus for instrumental analysis that executes chemical or physical analysis, when a restart request is output upon detection of a decrease in available memory capacity, analysis schedule information on an analyzer is collected, an analysis status of each analyzer is grasped, and a forcible opening operation of an unopened storage region of a storage device is executed during a period in which analysis is not executed".

### Citation List

### Patent Literature

PTL 1: JP2007-010357A

### Summary of Invention

### Technical Problem

However, in the related art, it is necessary to stop the apparatus to perform maintenance processing. For example, if the maintenance processing is performed in a time slot in which a load of the apparatus is large, there is a possibility that an operation is hindered, and therefore, it is necessary to stop the apparatus to reliably avoid an influence on the operation of the apparatus.

The data processing apparatus for instrumental analysis described in PTL 1 also needs to be restarted when a forcible opening operation of the unopened storage region is executed in the available time slot. That is, there is a problem that it is necessary to shift the apparatus from an operation state to a stop state to execute the forcible opening operation (maintenance process).

An object of the invention is to solve problems of the above-described related art, and to provide a system capable of executing maintenance processing in an operation state.

### Solution to Problem

An example of a sample test automation system according to the invention includes:
a storage unit configured to store sample data related to a sample to be tested; and
a control unit, in which
the control unit predicts an available time slot in which a load of the control unit falls below a predetermined level based on at least one of
   - information related to a test of a sample and
   - a used capacity history of the storage unit.

According to the invention, in an example of a method for predicting an available time slot in a sample test automation system, the sample test automation system including
a storage unit configured to store sample data related to a sample to be tested, and
a control unit,
the method includes:
predicting, by the control unit, an available time slot in which a load of the control unit falls below a predetermined level based on at least one of
- information related to a test of a sample and
- a used capacity history of the storage unit.

### Advantageous Effects of Invention

According to the invention, since the available time slot can be predicted, it is possible to schedule maintenance processing in the available time slot, and accordingly, it is possible to execute the maintenance processing in an operation state.

Problems, configurations, and effects other than those described above will be clarified by the following description of embodiments.

### Brief Description of Drawings

[FIG. 1] FIG. 1 is a schematic diagram showing a sample test automation system according to Embodiment 1 of the invention.
[FIG. 2] FIG. 2 is a flowchart of a case where a recommended deletion time slot of sample data is determined based on an available time slot in which a load of a control unit falls below a predetermined level in Embodiment 1.
[FIG. 3A] FIG. 3A shows a prediction example of an available time slot based on information related to sample test according to Embodiment 1.
[FIG. 3B] FIG. 3B shows a prediction example of an available time slot based on information related to sample test according to Embodiment 1.
[FIG. 4] FIG. 4 shows screen display examples in Embodiment 1.
[FIG. 5] FIG. 5 is a calculation example of a prediction transition of a load based on a used capacity history of a storage unit according to Embodiment 2 of the invention.
[FIG. 6] FIG. 6 shows screen display examples when a designated time is set according to Embodiment 3 of the invention.

### Description of Embodiments

Embodiments of the invention will be described in detail with reference to the drawings. In the following embodiments, components (also including element steps and the like) thereof are not necessarily essential unless otherwise specified or unless clearly considered to be essential in principle.

### [Embodiment 1]

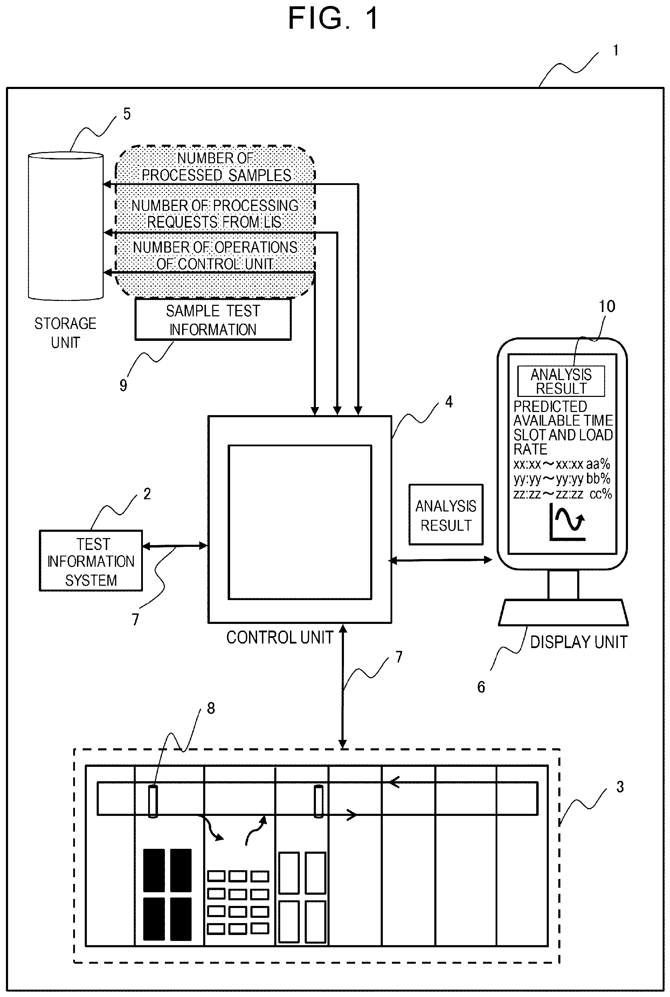

Hereinafter, Embodiment 1 of the invention will be described with reference to FIGS. 1, 2, 3A, 3B, and 4.

FIG. 1 is a schematic diagram showing a sample test automation system 1 according to Embodiment 1. The sample test automation system 1 is a system for automating a test in a hospital, a test facility, or the like, and when a schematic configuration thereof is described, the sample test automation system 1 includes a test information system 2, a system unit 3, a control unit 4, a storage unit 5, and a display unit 6.

The test information system 2 (which may be referred to as a laboratory information system and may be abbreviated as an LIS in the drawing) is a system that is connected to the control unit 4 using a communication line 7 and manages sample data. For example, when a sample 8 is processed by the system unit 3, a processing request for requesting a test of a sample is transmitted from the test information system 2, and the control unit 4 receives the processing request and issues a processing instruction to the system unit 3.

The system unit 3 performs processing related to a test of a sample or the like based on the processing instruction. The system unit 3 sends a processing result to the control unit 4, and the test information system 2 receives the processing result via the control unit 4.

The system unit 3 is for bringing the sample 8 into a state of being capable of being tested by an analyzer (not shown). The sample test automation system 1 or the system unit 3 may further include the analyzer. The system unit 3 includes a transport module, a centrifugation module, an opening and closing plug module, a dispensing module, a barcode attachment module, a transfer module, and a storage module, and performs processing with the modules such that the sample 8 can be in an analyzable state. For example, when the sample 8 is blood, the centrifugation module performs processing of centrifuging the sample 8 to separate the sample 8 into serum and blood cells. The dispensing module performs processing of subdividing and dispensing one sample 8 such that the sample 8 can be analyzed by a plurality of analyzers. The system unit 3 may also execute a test on the sample 8.

The control unit 4 has a hardware configuration as a known computer, and includes, for example, a calculation unit and a storage unit. The calculation unit includes, for example, a processor, and the storage unit includes a storage medium such as a semiconductor memory device and a magnetic disk device. A part of or the whole of the storage medium may be a non-transitory storage medium.

The storage unit may store a program. When the processor executes the program, the control unit 4 may execute functions described in the present embodiment.

The control unit 4 is connected to the system unit 3 using the communication line 7. Based on the processing request from the test information system 2, the control unit 4 issues the processing instruction to the system unit 3 to control operations of the system unit 3. In addition, the control unit 4 can acquire sample test information 9 related to the test of the sample 8 from the storage unit 5, and can predict an available time slot of the control unit 4 (for example, a time slot in which a load of the control unit 4 falls below a predetermined level) based on the sample test information 9.

The storage unit 5 stores the sample test information 9 of the sample test automation system 1. The sample test information 9 includes sample data related to a sample to be tested. The sample data includes, for example, a sample ID and a patient name for each sample to be tested. In addition, the sample data includes a concentration of each component and a date of the test for each tested sample.

The control unit 4 and the storage unit 5 may be integrally formed. For example, the storage unit of the control unit 4 may constitute the storage unit 5.

The sample test information 9 may include other information. For example, a processing history for each time slot may be included. The processing history for each time slot may include the number of samples 8 processed by the system unit 3 (processing number), the number of processing requests transmitted from the test information system 2, the number of operations of the control unit 4 by a user, and the like.

The number of processed samples 8 represents, for example, the number of samples 8 processed for each time slot. The number of processing requests transmitted from the test information system 2 represents, for example, the number of times of transmission of information (which may be limited to information for requesting the processing of the sample 8) related to the processing request transmitted from the test information system 2 to the system unit 3 via the control unit 4 for each time slot.

The number of operations of the control unit 4 by the user represents the number of times the user operates the control unit 4 to input an instruction to the system unit 3 for each time slot, and includes, as a specific example, the number of times of clicking a predetermined button on a predetermined GUI and/or the number of times of inputting a value via a predetermined field on the predetermined GUI.

A length of each time slot is, for example, one hour, that is, one day includes 24 time slots.

The display unit 6 displays a GUI that can be operated by the user. The GUI receives an operation for controlling the system unit 3 and/or displays information related to instruction guidance to the user. For example, a prediction transition (graph and/or numerical value) of the available time slot and a load predicted by the control unit 4 can be displayed as an analysis result 10.

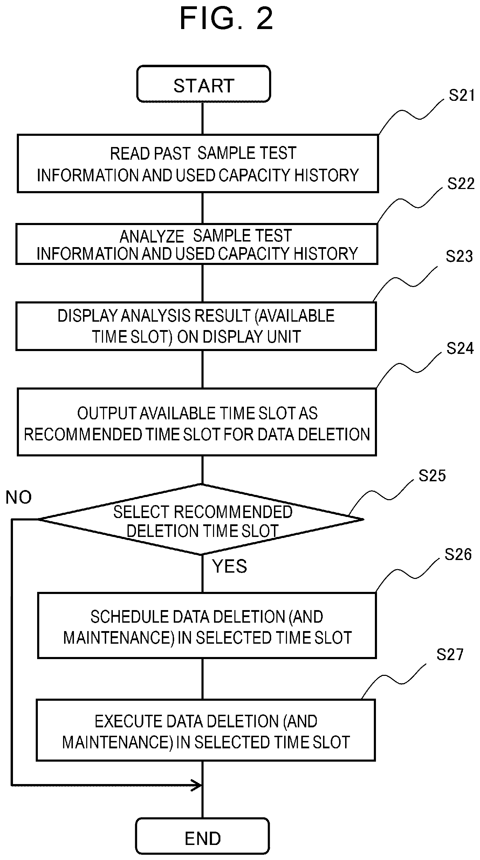

FIG. 2 is a flowchart of a case where the sample test automation system 1 determines a time slot in which data deletion is recommended based on an available time slot of the control unit 4. Operations based on the flowchart in FIG. 2 are as follows.

### (S21)

The control unit 4 reads the past (for example, up to last executed test processing) sample test information 9 from the storage unit 5. In addition, the control unit 4 reads a used capacity history of the storage unit 5 from the storage unit 5. The used capacity history of the storage unit 5 indicates, for example, an amount or ratio of a used region of the storage unit 5 for each time slot.

### (S22)

The control unit 4 may analyze the input sample test information 9 and predict a time slot in which the load of the control unit 4 falls below the predetermined level (hereinafter referred to as "available time slot"). Although a specific method for predicting the available time slot will be described later, the control unit 4 can predict the available time slot based on at least a part of the sample test information 9. Further, prediction accuracy of the available time slot may be improved by combining information related to a plurality of items included in the sample test information 9.

In addition, the control unit 4 may analyze the used capacity history of the storage unit 5 and predict the available time slot.

As described above, the control unit 4 predicts the available time slot based on at least one of the sample test information 9 and the used capacity history of the storage unit 5.

In this manner, the time slot in which the load on the control unit 4 is low is calculated. For example, a time slot in which the sample 8 is not processed even though the apparatus is in an operation state, a time slot in which the number of times of transmission and reception of the processing request from the test information system 2 is small, a time slot in which the user does not operate the control unit 4, a time slot in which a used capacity of the storage unit 5 is small, and the like correspond to the above time slot.

A system operation time per day varies depending on a facility (hospital, test facility, and the like) where the sample test automation system 1 is used, and the available time slot also varies. With this configuration, the operation state of the sample test automation system 1 can be clarified in a hospital or a test facility.

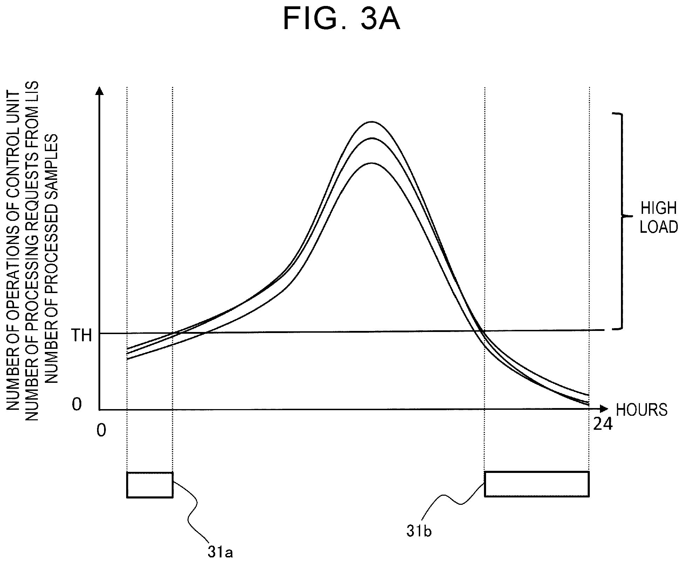

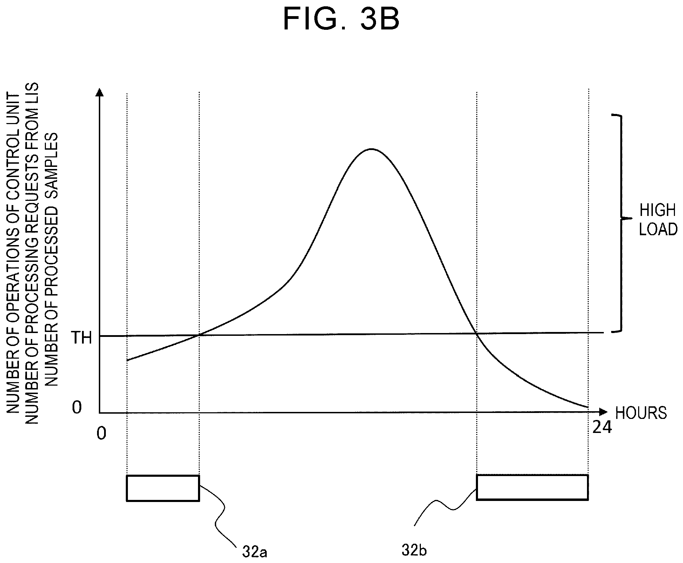

FIGS. 3A and 3B show prediction examples of the available time slot based on the sample test information 9. A horizontal axis represents time, and a vertical axis represents the load of the control unit 4. The load of the control unit 4 indicates, for example, any one of the number of processed samples, the number of processing requests from the test information system 2, and the number of operations of the control unit 4 by the user. In a modification, the load of the control unit 4 may indicate the used capacity of the storage unit 5.

Graphs of FIG. 3A and FIG. 3B are obtained by dividing data of a plurality of days included in the sample test information 9 for each time slot, and represent a transition thereof. The example in FIG. 3A shows data for three days, and each of three curves corresponds to data for one day. The example of FIG. 3B shows an average value of data for three days.

When a value of the vertical axis is equal to or less than a predetermined threshold TH in a certain time slot, it is determined that the time slot is a time slot with a low load, that is, the available time slot. For example, in the example of FIG. 3A, when values of the vertical axis of all days are equal to or less than the threshold TH in a certain time slot, the time slot is determined to be the available time slot. FIG. 3A shows available time slots 31a and 31b. On the other hand, when the value of the vertical axis of any day exceeds the predetermined threshold TH, it is determined that the control unit 4 has a high load in the corresponding time slot and the corresponding time slot is not the available time slot.

For example, in the example of FIG. 3B, when a value (average value) of the vertical axis is equal to or less than the threshold TH in a certain time slot, the time slot is determined to be the available time slot. FIG. 3B shows available time slots 32a and 32b. On the other hand, when the value of the vertical axis exceeds the predetermined threshold TH, it is determined that the control unit 4 has a high load in the corresponding time slot and the corresponding time slot is not the available time slot.

As a modification, the available time slot may be predicted using a plurality of items among the number of processed samples, the number of processing requests from the test information system 2, the number of operations of the control unit 4 by the user, and the used capacity of the storage unit 5. For example, a threshold may be set for each item, and a time slot in which values of all the items are equal to or less than the threshold may be calculated as the available time slot.

Since it can be considered that the available time slot occurs in the same pattern in all days including the past and the future in the same facility, it can be predicted that the time slots corresponding to the available time slots 32a and 32b on past days are also available time slots on future days.

### (S23)

The available time slot predicted by the control unit 4 and the transition of the load as shown in FIGS. 3A and 3B are displayed together as the analysis result 10 on the display unit 6. That is, the display unit 6 displays the available time slot and the transition of the load.

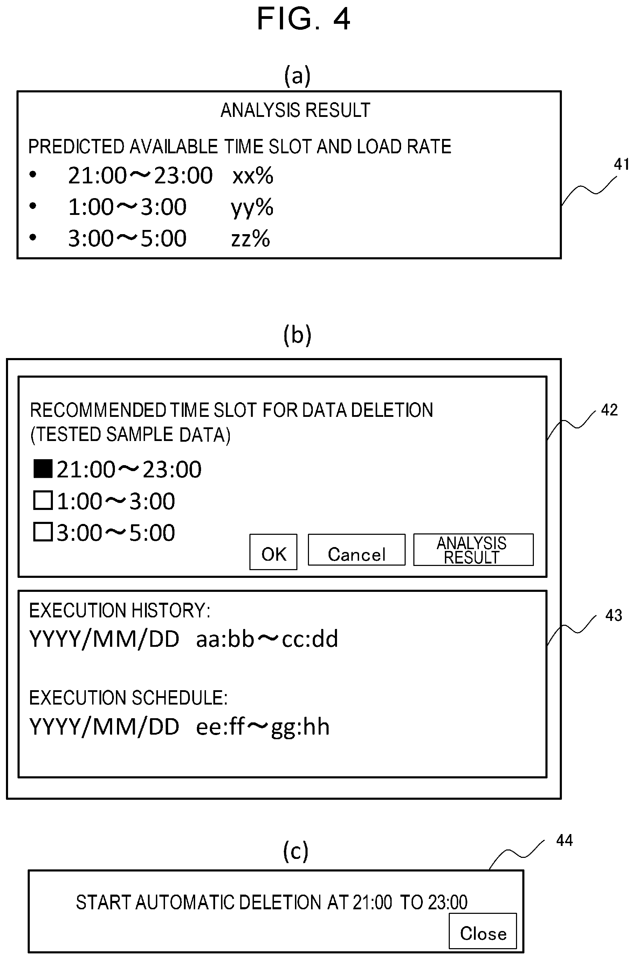

FIG. 4 shows screen display examples. (a) of FIG. 4 shows an example of a display screen 41 of the analysis result 10. The display screen 41 displays, as the analysis result 10, each predicted available time slot and a value of the load in each available time slot (for example, an average value in the available time slot). With this configuration, the analysis result can be visualized to the user.

In (a) of FIG. 4, only the value of the load in each available time slot is displayed, but the display unit 6 can display the transition of the load by the graphs as shown in FIGS. 3A and 3B, for example.

### (S24)

The control unit 4 outputs the predicted available time slot as a recommended time slot for data deletion. That is, in the recommended time slot, it is recommended that the control unit 4 deletes at least a part of data stored in the control unit 4 or the storage unit 5.

(b) of FIG. 4 is a screen display example (output example) of the display unit 6 in S24. A recommended time slot screen 42 for data deletion is displayed. In (b) of FIG. 4, data content as a deletion target is the sample data related to the tested sample, but the deletion target can be, for example, any one or more of the following.
- Sample data related to a tested sample (for example, data on a sample for which a test is completed up to 48 hours before a time point of execution of deletion)
- Processing request from the test information system 2 (for example, processing request received by the control unit 4 up to 48 hours before a time point of execution of deletion)

As described above, the control unit 4 recommends to delete at least a part of the tested sample data and at least a part of processing requests for requesting a test of a sample in the available time slot. With such recommendation processing, it is possible to effectively utilize the available time slot for the deletion processing.

As a modification, deletion of data other than the above may be recommended.

### (S25)

When the recommended time slot screen 42 is displayed, the user can select one or more recommended time slots from the screen 42. In particular, as shown in (a) of FIG. 4 and (b) of FIG. 4, when the display unit 6 displays a plurality of predicted available time slots, the user can appropriately select a most desired available time slot. In the example of (b) of FIG. 4, three recommended time slots are displayed on the recommended time slot screen 42, and it is indicated that the user is about to select "21: 00 to 23: 00" from the three recommended time slots.

A plurality of available time slots may be selected. As described above, the control unit 4 receives an input for selecting at least one of the plurality of available time slots.

In S25, when the user selects one or more available time slots (for example, when an "OK" button is operated in the state of (b) of FIG. 4), S26 is executed.

### (S26)

The control unit 4 determines to automatically delete the data as the deletion target in the selected time slot, and schedules the data deletion processing in the selected time slot. In addition, maintenance processing to be described later may be scheduled. (c) of FIG. 4 is an example of a confirmation screen 44 of the recommended time slot. This example shows that the user selects "21: 00 to 23: 00".

In S25, when the user does not select any available time slot (for example, when a "Cancel" button is operated in the state of (b) of FIG. 4), the control unit 4 determines not to automatically delete the data as the deletion target in any time slot, and omits the execution of S26 and S27.

### (S27)

The control unit 4 automatically deletes the data as the deletion target in the selected available time slot. For example, the control unit 4 automatically deletes at least a part of the sample data related to the tested sample in the available time slot. According to such a configuration, since the data deletion processing can be scheduled in the available time slot, the data deletion processing can be executed in the operation state without causing a problem in load of the control unit 4.

As shown in (b) of FIG. 4, the control unit 4 may display an execution information screen 43 including an execution history for data deletion (for example, a time slot in which data deletion is last executed) and an execution schedule for data deletion (for example, a scheduled time slot in which next data deletion is to be executed).

In addition, the control unit 4 may execute processing other than the data deletion in the selected available time slot. For example, predetermined maintenance processing may be executed. The maintenance processing includes, for example, automatic replenishment processing of consumables. In addition, for example, when a setting change of the sample test automation system 1 is scheduled (for example, when a setting parameter is changed but is not reflected in an actual operation), actual setting change processing is included.

According to such a configuration, since the maintenance processing can be scheduled in the available time slot, the maintenance processing can be executed in the operation state without causing a problem in load of the control unit 4. For example, it is also possible to execute the maintenance processing such as a system operation condition change, which is required to transition to a stop state in the related art, in the operation state.

The selection processing (S25) by the user may be omitted. In this case, the data deletion processing or the maintenance processing can be automatically executed by the control unit 4 in any of the available time slots.

With the configuration described above, since the automatic deletion of data and/or the maintenance processing is performed in the predicted available time slot, it is possible to execute the data deletion and the maintenance processing in the operation state. Accordingly, for example, it is not necessary to stop the sample test automation system 1, and a 24-hour operation can be implemented. In addition, it is possible to prevent enlargement of the sample data and maintain performance of the control unit 4.

Further, since the automatic deletion is performed in the available time slot, even if the load of the control unit 4 increases due to the deletion processing, a maximum value of the load can be restricted to be smaller.

### [Embodiment 2]

In the present embodiment, the prediction transition of the used capacity of the storage unit 5 is calculated in S22 based on the used capacity history of the storage unit 5 read in S21 in Embodiment 1. The configuration other than S21 and S22 can be the same as that of Embodiment 1. Hereinafter, description of parts common to Embodiment 1 may be omitted.

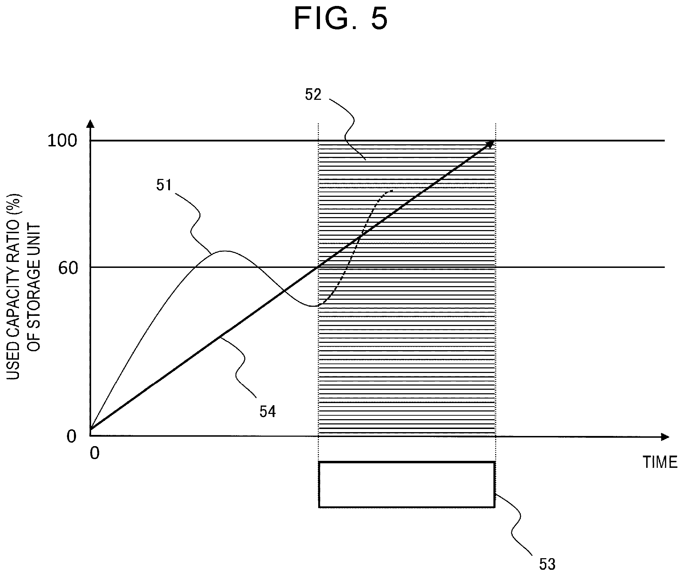

FIG. 5 is a calculation example of a prediction transition of a load based on the used capacity history of the storage unit 5. A calculation method different from that of Embodiment 1 will be described. A horizontal axis represents time, and a vertical axis represents a used capacity ratio of the storage unit 5.

The control unit 4 periodically acquires a history of the used capacity of the storage unit 5 from the storage unit 5 as a used capacity history 51. The control unit 4 predicts the transition of the used capacity based on the used capacity history 51. The prediction can be made, for example, by linearly approximating the used capacity history 51. For example, a least squares method can be used for the linear approximation. However, the specific prediction method is not limited thereto.

As described above, the control unit 4 predicts the transition of the used capacity history 51 of the storage unit 5 and calculates a prediction transition 54. The control unit 4 may display the predicted available time slot and the predicted prediction transition 54 (for example, a graph or a numerical value). According to such a configuration, the user can easily grasp a transition of an available capacity of the storage unit 5.

The control unit 4 calculates a prediction region 52 in which the prediction transition 54, that is, a predicted value of the used capacity exceeds a predetermined threshold (for example, 60%). A time slot corresponding to the prediction region 52 is recommended to the user as a recommended time slot 53 for data deletion.

### [Embodiment 3]

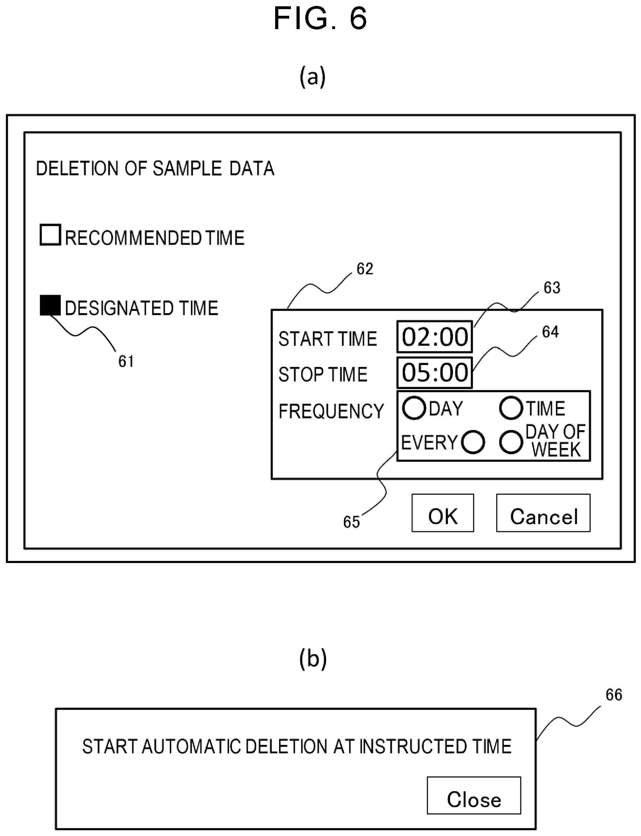

Hereinafter, Embodiment 3 of the invention will be described with reference to FIG. 6. Hereinafter, description of parts common to Embodiment 1 or 2 may be omitted.

The sample test automation system 1 according to the present embodiment is implemented such that a user can determine and manually input a deletion time slot of sample data.

FIG. 6 is a screen display example when a deletion time slot is input. (a) of FIG. 6 is a display example of a setting screen of the deletion time slot. After the control unit 4 is activated, the user can select a designated time selection field 61 and input a time slot in which deletion of data is executed. In a deletion time slot input field 62, a start time 63, a stop time 64, and a frequency 65 (for example, an execution interval; n times per day, every day, every week, every month, and the like) of the deletion time slot can be input.

(b) of FIG. 6 is a display example of a confirmation screen when the setting is completed. Automatic deletion of data is set in the input time slot, and a confirmation message 66 is displayed.

As described above, the control unit 4 receives an input of a time slot for deleting data (for example, at least a part of the tested sample data and at least a part of processing requests for requesting a test of a sample).

According to the configuration described above, the deletion time slot of data desired by the user can be freely set. Therefore, since the user can determine the deletion time slot while avoiding the time slot in which the user schedules to perform work, the sample test automation system 1 that does not hinder the work of the user can be provided. When the user inputs the deletion time slot, the user can refer to the recommended time slot (see Embodiment 1) output by the control unit 4, and thus the user can appropriately determine the deletion time slot.

### Reference Signs List

1: sample test automation system
2: test information system
3: system unit
4: control unit
5: storage unit
6: display unit
7: communication line
8: sample
9: sample test information (sample data)
10: analysis result
31a, 31b, 32a, 32b: available time slot
41: display screen
42: recommended time slot screen
43: execution information screen
44: confirmation screen
51: used capacity history
52: prediction region
53: recommended time slot
54: prediction transition
61: designated time selection field
62: deletion time slot input field
63: start time
64: stop time
65: frequency
66: confirmation message
TH: threshold

## Claims

1. A sample test automation system comprising:
a storage unit configured to store sample data related to a sample to be tested; and
a control unit, wherein
the control unit predicts an available time slot in which a load of the control unit falls below a predetermined level based on at least one of
- information related to a test of a sample and
- a used capacity history of the storage unit.

2. The sample test automation system according to claim 1, wherein
the control unit recommends to delete at least a part of tested sample data and at least a part of processing requests for requesting a test of a sample in the available time slot.

3. The sample test automation system according to claim 1, wherein
the sample test automation system includes a display unit configured to display the available time slot,
the control unit predicts a transition of the used capacity history of the storage unit, and
the display unit displays the predicted available time slot and the predicted transition of the used capacity history.

4. The sample test automation system according to claim 1, wherein
the sample test automation system includes a display unit that displays a plurality of the available time slots.

5. The sample test automation system according to claim 1, wherein
the control unit automatically deletes at least a part of the sample data related to a tested sample in the available time slot.

6. The sample test automation system according to claim 1, wherein
the control unit executes a predetermined maintenance processing in the available time slot.

7. The sample test automation system according to claim 4, wherein
the control unit
receives an input for selecting at least one of the plurality of available time slots, and
automatically deletes at least a part of tested sample data and at least a part of processing requests for requesting a test of a sample in the selected available time slot.

8. The sample test automation system according to claim 1, wherein
the control unit receives an input of a time slot for deleting at least a part of tested sample data and at least a part of a processing request for requesting a test of a sample.

9. A method for predicting an available time slot in a sample test automation system,
the sample test automation system including
a storage unit configured to store sample data related to a sample to be tested, and
a control unit,
the method comprising:
predicting, by the control unit, an available time slot in which a load of the control unit falls below a predetermined level based on at least one of
- information related to a test of a sample and
- a used capacity history of the storage unit.
